# FASCICULE DE BREVET EUROPEEN

(11) **EP 4 016 777 B1**
(45) Date de publication et mention de la délivrance du brevet: **21.06.2023**
(21) Numéro de dépôt: 21214930.6
(22) Date de dépôt: 15.12.2021
(51) Int. Cl.: H02H 3/33, H02H 3/093

(54) **APPAREIL ÉLECTRIQUE DE PROTECTION D'UNE INSTALLATION ÉLECTRIQUE EN COURANT ALTERNATIF**
STROMSCHUTZGERÄT EINER ELEKTRISCHEN ANLAGE MIT WECHSELSTROM
ELECTRICAL DEVICE FOR PROTECTING AN ALTERNATING CURRENT ELECTRICAL INSTALLATION

(30) Priorité: 18.12.2020 FR 2013756
(43) Date de publication de la demande: 22.06.2022
(73) Titulaire: Legrand France, 87000 Limoges (FR); Legrand SNC, 87000 Limoges (FR)
(72) Inventeur: CARINCOTTE, Christian, 06270 VILLENEUVE LOUBET (FR)
(74) Mandataire: Santarelli

(56) Documents cités:
- FR-A1- 2 137 591
- FR-A1- 2 595 514
- JP-A- H1 084 623
- US-A- 4 150 411

## Description

### Domaine technique de l'invention

L'invention a trait aux appareils électriques de protection d'une installation électrique en courant alternatif.

### Etat de la technique

On sait que pour protéger une installation électrique en courant alternatif, on utilise des appareils électriques interrompant automatiquement la liaison avec le réseau d'alimentation électrique s'ils détectent des défauts prédéterminés, notamment un court-circuit, une surintensité prédéterminée en valeur et en durée et/ou un défaut différentiel.

Parmi ces appareils, certains sont configurés pour que le sectionnement avec le réseau soit effectué exclusivement avec de l'énergie provenant du défaut détecté, et non du réseau d'alimentation électrique.

Pour la protection en cas de surintensité prolongée, de tels appareils utilisent un bilame dans lequel circule le courant traversant l'appareil. Si la surintensité se prolonge, le bilame s'échauffe et si certaines caractéristiques de valeur et de durée de la surintensité sont présentes, la courbure que prend le bilame du fait qu'il est constitué de deux métaux ayant des coefficient de dilatation différents, devient telle que le bilame agit sur un mécanisne qui opère le sectionnement.

Pour la protection en cas de défaut différentiel, de tels appareils utilisent un transformateur de détection de défaut différentiel et un organe de déclenchement relais très sensible qui est configuré pour que l'énergie fournie par l'enroulement secondaire du transformateur de détection de défaut différentiel soit suffisante, au cas où se produit un tel défaut, pour metttre en mouvement le percuteur que comporte cet organe de façon adéquate pour agir sur le mécanisme qui opère le sectionnement.

On a déjà proposé de remplacer le bilame par un transformateur de capture de courant et par un circuit électronique relié à ce transformateur de capture de courant et à l'organe de déclenchement relais afin de l'alimenter pour l'actionner au cas où se produit une surintensité prolongée prédéreminée en valeur et en durée.

La demande de brevet français 2 501 929 décrit un tel appareil dans lequel le circuit électronique comporte un circuit redresseur-accumulateur relié en entrée au transformateur de capture du courant et en sortie à une résistance connectée en série à un condensateur. Si la tension aux bornes du condensateur atteint un certain seuil un amplicateur opérationnel réagit en commandant un thyristor qui laisse alors le circuit redresseur-accumulateur alimenter de façon adéquate le relais de déclenchement pour qu'il agisse sur le mécanisme opérant le sectionnemment.

Un tel circuit électronique présente l'inconvénient que la charge du condensateur dépend de l'historique de la valeur du courant y compris avant que ne débute une surintensité.

Il en résulte que cet appareil déclenche trop tôt dans certaines circonstances, notamment si avant que débute la surintensité le courant avait eu pendant un certain temps une intensité elevée mais sans constituer une surintensité.

La demande de brevet français FR 595 514 décrit un appareil semblable mais dans lequel l'amplificateur opérationnel du circuit électronique est remplacé par une porte logiques ET tandis qu'une autre porte logique ET est configurée pour détecter si une surintensité se produit afin de bloquer une branche de décharge du condensateur.

Un tel circuit est ainsi moins sensible à l'historique de la valeur du courant que celui décrit par la demande de brevet français 2 501 929.

Autres appareils de protection électrique sont décrits dans les documents US 4150411, FR 2137591, JP 1084623.

### Exposé de l'invention

L'invention vise à fournir un appareil du même genre, mais présentant de meilleures performances en matière de détection de la survenance d'une surintensité prédéterminée en valeur et en durée.

L'invention, telle que définie par la revendication 1, propose à cet effet un appareil électrique de protection d'une installation électrique en courant alternatif, ayant une première borne d'arrivée pour un premier pôle électrique, une deuxième borne d'arrivée pour un deuxième pôle électrique différent du premier pôle électrique, une première borne de départ pour le premier pôle électrique et une deuxième borne de départ pour le deuxième pôle électrique ; lequel appareil comporte :
- un premier circuit de cheminement de courant entre la première borne d'arrivée et la première borne de départ, comportant un contact fixe et un contact mobile;
- un deuxième circuit de cheminement de courant entre la deuxième borne d'arrivée et la deuxième borne de départ;
- un mécanisme de commande dudit contact mobile ayant deux positions stables, respectivement une position de sectionnement où ledit contact mobile est à l'écart dudit contact fixe et une position d'enclenchement où ledit contact mobile est en appui sur ledit contact fixe;
- un premier transformateur électrique, comportant un premier enroulement primaire faisant partie dudit premier circuit de cheminement, un deuxième enroulement primaire faisant partie dudit deuxième circuit de cheminement et un enroulement secondaire grâce auquel peut être détecté un défaut différentiel prédéterminé entre lesdits premier circuit de cheminement et deuxième circuit de cheminement ;
- un organe de déclenchement relais configuré pour agir sur ledit mécanisme de commande pour le faire passer de ladite position d'enclenchement à ladite position de sectionnement quand il est alimenté d'une façon prédéterminée, ledit organe de déclenchement relais et ledit premier transformateur électrique étant reliés l'un à l'autre et configurés pour que, quand se produit ledit défaut différentiel prédéterminé, ledit organe de déclenchement relais est alimenté de ladite façon prédéterminée par de l'énergie provenant exclusivement dudit enroulement secondaire dudit premier transformateur électrique ;
- un deuxième transformateur électrique, comportant un enroulement primaire faisant partie dudit premier circuit de cheminement ou dudit deuxième circuit de cheminement et un enroulement secondaire grâce auquel peut être détectée l'intensité du courant circulant dans ledit enroulement primaire ;
- un circuit électronique disposé entre ledit enroulement secondaire dudit deuxième transformateur électrique et ledit organe de déclenchement relais, configuré pour que ledit organe de déclenchement relais soit alimenté de ladite façon prédéterminée par de l'énergie provenant exclusivement dudit enroulement secondaire dudit deuxième transformateur lorsque se produit une surintensité prolongée prédéterminée en valeur et en durée dans ledit enroulement primaire dudit deuxième transformateur, comportant :
- un étage redresseur-accumulateur ayant deux points de raccordement d'entrée reliés respectivement à une première extrémité dudit enroulement secondaire dudit deuxième transformateur et à une deuxième extrémité dudit enroulement secondaire dudit deuxième transformateur et ayant deux points de raccordement de sortie reliés respectivement à un premier conducteur et à second conducteur entre lesquels existe une tension continue représentative de ladite intensité du courant circulant dans ledit enroulement primaire dudit deuxième transformateur ;
- un étage comparateur configuré pour fournir un signal de dépassement ou de non-dépassement d'un seuil prédéterminé de ladite tension continue représentative ;
- un étage d'intégration temps-tension configuré pour fournir un signal d'intégration temps-tension ayant un niveau représentatif de la survenance ou de la non-survenance d'une surintensité prédéterminée en valeur et en durée dans l'enroulement primaire dudit deuxième transformateur, le niveau dudit signal d'intégration augmentant lorsque ledit étage comparateur se met à fournir ledit signal de dépassement alors qu'il fournissait ledit signal de non-dépassement, avec le degré d'augmentation du niveau du signal d'intégration qui dépend de ladite tension continue représentative, le niveau dudit signal d'intégration diminuant lorsque ledit étage comparateur se met à fournir ledit signal de non-dépassement alors qu'il fournissait ledit signal de dépassement ; et
- un étage de commutation, configuré pour isoler ledit organe de déclenchement relais d'au moins un des dits premier conducteur et second conducteur afin que ledit organe de déclenchement relais ne soit pas alimenté de ladite façon prédéterminée quand ledit signal d'intégration a un niveau représentatif de la non-survenance d'une dite surintensité prédéterminée et pour relier ledit organe de déclenchement relais avec lesdits premier conducteur et second conducteur afin que ledit organe de déclenchement relais soit alimenté de ladite façon prédéterminée quand ledit signal d'intégration a un niveau représentatif de la survenance d'une dite surintensité prédéterminée ;
caractérisé en ce que ledit étage d'intégration temps-tension est alimenté en tension exclusivement par deux conducteurs entre lesquels est fourni par ledit étage comparateur un niveau de tension formant ledit signal de dépassement ou de non-dépassement, ledit signal de non-dépassement étant un niveau de tension bas constant prédéterminé, ledit signal de dépassement étant un niveau de tension haut variant comme ladite tension continue représentative.

Au contraire, dans le circuit électronique décrit par la demande de brevet français 2 595 514, l'étage d'intégration temps-tension est alimenté en tension par trois conducteurs, à savoir le premier conducteur et le second conducteur entre lesquels existe une tension continue représentative de l'intensité du courant circulant dans l'enroulement primaire du deuxième transformateur ainsi qu'un autre conducteur en sortie de la porte ET sur lequel est fourni un niveau de tension formant le signal de dépassement (niveau haut prédéterminé) ou de non-dépassement (niveau bas prédéterminé).

L'invention est basée sur l'observation qu'il n'est en fait pas indispensable que l'étage d'intégration temps-tension soit alimenté par le premier conducteur et le second conducteur entre lesquels existe une tension continue représentative de l'intensité du courant circulant dans l'enroulement primaire du deuxième transformateur, à condition de disposer d'un signal de dépassement ou de non-dépassement dont le niveau haut (signal de dépassement) varie comme la tension continue représentative, l'étage d'intégration temps-tension pouvant alors être alimenté exclusivement par deux conducteurs entre lesquels l'étage comparateur fournit un niveau de tension formant ledit signal de dépassement ou de non-dépassement.

On évite ainsi d'avoir deux sources de tension alimentant l'étage d'intégration temps-tension, ce qui rend très complexe la mise au point de cet étage et le rend au surplus sensible aux transitoires.

En outre, en prévoyant que le signal de non-dépassement est un niveau de tension bas constant prédéterminé, par exemple le niveau zéro, on évite ou en tout cas on minimise considérablement l'influence de l'évolution de l'intensité avant l'apparition de la surintensité.

L'appareil selon l'invention est ainsi particulièrement performant en matière de détection de la survenance d'une surintensité prédéterminée en valeur et en durée, tout en étant simple et économique.

Selon des caractéristiques avantageuses :
- ledit étage d'intégration temps-tension comporte une première résistance, un condensateur et une seconde résistance, une première borne de la première résistance étant reliée à un premier desdits deux conducteur entre lesquels est fourni ledit niveau de tension formant ledit signal de dépassement ou de non-dépassement, la seconde borne de la première résistance étant reliée à une première borne du condensateur, la seconde borne du condensateur étant reliée au second desdits deux conducteur entre lesquels est fourni ledit niveau de tension formant ledit signal de dépassement ou de non-dépassement, la seconde résistance étant disposée en parallèle du condensateur, ladite première borne du condensateur étant relié à un conducteur de signal d'intégration sur lequel ledit étage d'intégration temps-tension fournit ledit signal d'intégration temps-tension, ledit niveau du signal d'intégration temps-tension étant la différence de potentiel entre ledit conducteur de signal d'intégration et ledit second conducteur desdits deux conducteur entre lesquels est fourni ledit niveau de tension formant ledit signal de dépassement ou de non-dépassement
- ledit étage comparateur comporte un amplificateur opérationnel monté en comparateur à seuil positif, la borne d'alimentation négative dudit amplificateur opérationnel étant reliée audit premier conducteur, la borne d'alimentation positive dudit amplificateur opérationnel étant reliée audit second conducteur, la sortie dudit amplificateur opérationnel étant reliée à un conducteur de signal de dépassement ou de non-dépassement, lesdits deux conducteurs entre lesquels est fourni par ledit étage comparateur un niveau de tension formant ledit signal de dépassement ou de non-dépassement étant ledit conducteur de signal de dépassement ou de non-dépassement et ledit premier conducteur, ledit niveau de tension bas constant prédéterminé formant ledit signal de non-dépassement étant le niveau zéro, ledit niveau de tension haut variant comme ladite tension continue représentative formant ledit signal de dépassement étant ladite tension continue représentative ;

- ledit étage comparateur comporte en outre une résistance et une diode Zener, ladite résistance étant reliée par une première borne audit second conducteur et par une seconde borne à la cathode de ladite diode Zener dont l'anode est reliée audit premier conducteur, l'entrée négative de l'amplificateur opérationnel étant reliée à la cathode de ladite diode Zener, grâce à quoi la différence de potentiel entre l'entrée négative de l'amplificateur opérationnel et ledit premier conducteur est maintenue par ladite diode Zener à une valeur de référence constante préfixée ;
- ledit étage comparateur comporte un sous-étage de mise en forme comportant une première résistance et une deuxième résistance disposées en série entre ledit second conducteur et ledit premier conducteur, une première borne de la première résistance étant reliée audit second conducteur, la seconde borne de la première résistance étant reliée à une première borne de la deuxième résistance, la seconde borne de la deuxième résistance étant reliée audit premier conducteur, l'entrée positive dudit amplificateur opérationnel étant reliée à la seconde borne de la première résistance et donc à la première borne de la deuxième résistance ;
- ledit étage redresseur-accumulateur comporte une première diode, un premier condensateur, un deuxième condensateur et une deuxième diode, l'anode de ladite première diode étant reliée à l'un desdits points de raccordement d'entrée dudit étage redresseur-accumulateur, la cathode de ladite première diode étant reliée à l'un desdits points de raccordement de sortie dudit étage redresseur-accumulateur et à une première borne dudit premier condensateur, la second borne dudit premier condensateur étant reliée à l'autre desdits points de raccordement d'entrée dudit étage redresseur-accumulateur et à une première borne dudit deuxième condensateur, la seconde borne dudit deuxième condensateur étant reliée à l'anode de ladite deuxième diode et à l'autre desdits points de raccordement de sortie dudit étage redresseur-accumulateur, la cathode de ladite deuxième diode étant reliée à l'anode de ladite première diode, ledit étage redresseur-accumulateur comportant ainsi un redresseur-doubleur de tension de LATOUR ;

- ledit étage redresseur-accumulateur comporte en outre un premier condensateur d'accumulation, un deuxième condensateur d'accumulation, une première résistance et une deuxième résistance, ledit premier condensateur d'accumulation et ladite première résistance étant disposés en parallèle dudit premier condensateur, ledit deuxième condensateur d'accumulation et ladite deuxième résistance étant disposés en parallèle dudit deuxième condensateur ;
- ledit étage de commutation comporte un amplificateur opérationnel et un organe de commutation ; l'entrée positive dudit amplificateur opérationnel étant reliée à un conducteur de signal d'intégration sur lequel ledit étage d'intégration temps-tension fournit ledit signal d'intégration temps-tension, ledit niveau du signal d'intégration temps-tension étant la différence de potentiel entre ledit conducteur de signal d'intégration et ledit second conducteur ; l'entrée négative dudit amplificateur opérationnel étant reliée à des composants grâce auxquels la différence de potentiel entre l'entrée négative de l'amplificateur opérationnel et ledit premier conducteur est maintenue à une valeur de référence constante préfixée, ledit signal d'intégration ayant un niveau représentatif de la non-survenance d'une dite surintensité prédéterminée lorsque la différence de potentiel entre ledit conducteur de signal d'intégration et ledit premier conducteur est plus petite que ladite valeur de référence constante préfixée, ledit signal d'intégration ayant un niveau représentatif de la survenance d'une dite surintensité prédéterminée lorsque la différence de potentiel entre ledit conducteur de signal d'intégration et ledit premier conducteur est plus grande que ladite valeur de référence constante préfixée ; la borne d'alimentation positive dudit amplificateur opérationnel étant reliée audit second conducteur ; la borne d'alimentation négative dudit amplificateur opérationnel étant reliée audit premier conducteur ; la sortie dudit amplificateur opérationnel étant reliée audit organe de commutation ; grâce à quoi si la différence de potentiel entre ledit conducteur de signal d'intégration et ledit premier conducteur est plus petite que ladite valeur de référence constante préfixée, la sortie de l'amplificateur opérationnel est au potentiel dudit premier conducteur et l'organe de commutation est bloqué, de sorte que l'organe de déclenchement relais n'est pas alimenté par l'étage redresseur-accumulateur ; et grâce à quoi si la différence de potentiel entre ledit conducteur de signal d'intégration et le premier conducteur est plus grande que ladite valeur de référence constante préfixée, la sortie dudit amplificateur opérationnel est au potentiel dudit premier conducteur et l'organe de commutation est passant, de sorte que l'organe de déclenchement relais est alimenté par l'étage redresseur-accumulateur ;

- ledit appareil comporte un organe compact comportant un organe de déclenchement magnétique et un relais de déclenchement, l'organe de déclenchement magnétique étant formé par une bobine de déclenchement magnétique disposée autour d'un noyau mobile commandant un percuteur agissant en cas de court-circuit sur ledit mécanisme de commande, le relais de déclenchement étant formé par une bobine de relais de déclenchement disposée autour dudit noyau mobile, la bobine de déclenchement magnétique et la bobine de relais de déclenchement étant disposées l'une autour de l'autre, grâce à quoi ledit organe compact est configuré pour former ledit deuxième transformateur avec ledit enroulement primaire qui est ladite bobine de déclenchement magnétique et ledit enroulement secondaire qui est ladite bobine de relais de déclenchement ; et/ou
- ledit appareil forme un disjoncteur différentiel modulaire ayant une largeur d'1 module.

### Brève description des figures

On va maintenant poursuivre l'exposé de l'invention par la description détaillée d'exemples de réalisation, donnée ci-après à titre illustratif et non limitatif, en référence aux dessins annexés. Sur ceux-ci :
- la figure 1 est une vue en perspective d'un appareil de protection selon l'invention, prise de droite, en haut et en avant de cet appareil ;
- la figure 2 montre de façon très schématique le circuit électrique de l'appareil de la figure 1 et le mécanisme de commande des contacts mobiles que comporte ce circuit électrique ;
- la figure 3 est une représentation schématique du circuit électronique que comporte le circuit électrique de l'appareil de la figure 1 ;
- la figure 4 montre de façon plus détaillée ce circuit électronique ; et
- la figure 5 est similaire à la figure 2, sauf que le transformateur pour la détection de surintensité et l'organe de déclenchement magnétique sont remplacés par un organe compact.

### Description détaillée

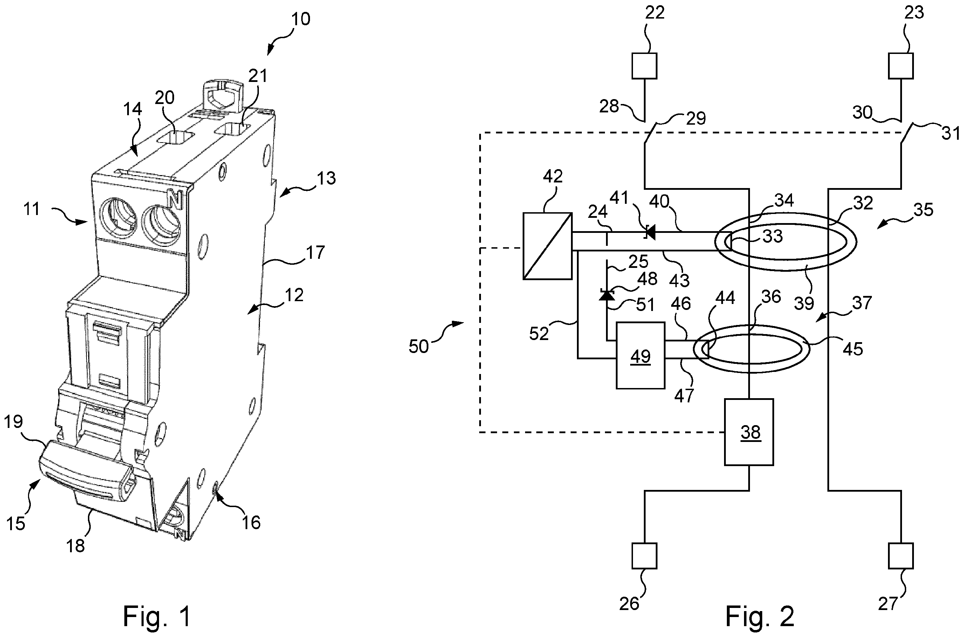

L'appareil 10 de protection d'une installation électrique en courant alternatif montré sur la figure 1 a une forme globalement parallélépipédique.

Il présente deux faces principales, respectivement une face gauche 11 et une face droite 12, et des faces latérales s'étendant de l'une à l'autre des faces principales 11 et 12, à savoir une face arrière 13, une face supérieure 14, une face avant 15 et une face inférieure 16.

La face arrière 13 présente une échancrure 17 pour le montage de l'appareil 10 sur un rail de support normalisé à profil en Ω (non représenté).

La face avant 15 présente, en position centrale, sur à peu près la moitié de sa longueur, un nez 18 présentant une manette 19.

Ici, l'appareil 10 est du type modulaire, c'est-à-dire qu'outre sa forme globalement parallélépipédique, sa largeur (distance entre les deux faces principales 11 et 12) est un multiple d'une valeur normalisée, connue sous le nom de « module », qui est de l'ordre de 18 mm.

Ici, l'appareil 10 a une largeur d'1 module.

L'appareil 10 est configuré, conformément au format modulaire, pour appartenir à une rangée d'appareils modulaires disposés côte-à-côte en étant fixés par l'arrière sur le rail de support disposé horizontalement.

La face supérieure 14 présente deux orifices d'introduction 20 et 21 donnant accès respectivement à une borne de raccordement 22 et à une borne de raccordement 23. L'orifice 20 et la borne 22 sont situés à gauche. L'orifice 21 et la borne 23 sont situés à droite.

De même, la face inférieure 16 présente deux orifices d'introduction, un premier orifice et un deuxième orifice donnant accès respectivement à une borne de raccordement 26 et à une borne de raccordement 27. Le premier orifice et la borne 26 sont situés à gauche. Le deuxième orifice et la borne 27 sont situés à droite.

Chacune des bornes de raccordement 22, 23, 26 et 27 est prévue pour recevoir un tronçon d'extrémité dénudé d'un câble électrique ou une dent d'un peigne de répartition horizontale de l'électricité dont le pas (entraxe entre deux dents successives) est d'un module.

Ici, les bornes 22 et 23 situées en haut sont prévues pour être raccordées aux deux pôles d'un réseau de distribution de l'électricité tandis que les deux bornes 26 et 27 situées en bas sont prévues pour être raccordées à un circuit d'installation électrique à protéger.

L'appareil 10 est un disjoncteur différentiel à un pôle protégé, c'est-à-dire ayant un circuit électrique opérant une détection de court-circuit et de surintensité dans le circuit de cheminement du pôle protégé (fonction disjoncteur) et opérant une détection de différence d'intensités du courant circulant dans le circuit de cheminement du pôle protégé et dans le circuit de cheminement du pôle non protégé (fonction différentielle).

Ici, la borne 22 et la borne 26 situées à gauche sont prévues pour le pôle de l'installation électrique à protéger, qui est une phase, tandis que la borne 23 et la borne 27 situées à droite sont prévues pour le pôle de l'installation électrique non protégé, qui est le neutre.

Le circuit de cheminement entre les bornes 22 et 26 comporte en série un contact fixe 28, un contact mobile 29, un enroulement 34 faisant partie d'un transformateur électrique 35 de détection de défaut différentiel, un enroulement 36 faisant partie d'un transformateur électrique 37 de détection de surintensité et un organe de déclenchement magnétique 38.

Le circuit de cheminement entre les bornes 23 et 27 situées à droite comporte en série un contact fixe 30, un contact mobile 31 et un enroulement 32 faisant partie du transformateur électrique 35 de détection de défaut différentiel.

Le transformateur 35 comporte, en outre de l'enroulement 34 du circuit de cheminement entre les bornes 22 et 26 et de l'enroulement 32 du circuit de cheminement entre les bornes 23 et 27, qui forment les enroulements primaires, un enroulement secondaire 33, et une armature annulaire (circuit magnétique) 39 autour de laquelle sont effectués l'enroulement secondaire 33 et les enroulements primaires 32, 34.

Une première extrémité de l'enroulement secondaire 33 du transformateur 35 est relié par un conducteur électrique 40 à l'anode d'une diode Zener 41 dont la cathode est reliée par un conducteur 24 à un premier point de raccordement d'un organe de déclenchement relais 42. La seconde extrémité de l'enroulement 33 est reliée par un conducteur 43 à un second point de raccordement de l'organe de déclenchement relais 42.

L'organe de déclenchement relais 42 agit en cas de défaut différentiel prédéterminé détecté grâce au transformateur 35, l'organe de déclenchement relais étant très sensible afin que l'enroulement 33 lui procure suffisamment d'énergie sur ses points de raccordement pour que le percuteur que comporte l'organe 42 soit mis en mouvement de façon adéquate.

De tels organes de déclenchement relais très sensibles sont bien connus et décrits par exemple dans les demandes de brevet français 2 596 577, 2 622 739, 2 823 369, 2 823 370 et 2 823 371.

Le transformateur 37 comporte, en outre de l'enroulement 36 du circuit de cheminement entre les bornes 22 et 26, un enroulement secondaire 44 et une armature annulaire (circuit magnétique) 45 autour de laquelle est effectué l'enroulement secondaire 44 et l'enroulement primaire 36.

Une première extrémité de l'enroulement secondaire 44 est reliée par un conducteur 46 à un premier point de raccordement d'entrée d'un circuit électronique 49. La seconde extrémité de l'enroulement 44 est reliée par un conducteur 47 à un second point de raccordement d'entrée du circuit électronique 49.

Un premier point de raccordement de sortie du circuit électronique 49 est relié par un conducteur électrique 51 à l'anode d'une diode Zener 48 dont la cathode est reliée par un conducteur 25 au premier point de raccordement de l'organe de déclenchement relais 42. Le second point de raccordement de sortie du circuit 49 est relié par un conducteur 52 au second point de raccordement d'entrée de l'organe de déclenchement relais 42.

Pour commander les contacts mobiles 29 et 31, l'appareil 10 comporte un mécanisme 50, en général appelé serrure.

L'organe de déclenchement relais 42 et l'organe de déclenchement magnétique 38 sont configurés pour agir mécaniquement sur la serrure 50, si besoin.

La serrure 50 a deux positions stables, respectivement une position de sectionnement où les deux contacts mobiles 29 et 31 sont chacun à l'écart des contacts fixes 28 et 30 correspondants et une position d'enclenchement où chacun des deux contacts mobiles 29 et 31 est en appui respectivement sur le contact fixe 28 et sur le contact fixe 30.

La manette 19, en saillie de la face avant 15, permet d'agir manuellement sur la serrure 50 pour passer de la position de sectionnement à la position d'enclenchement ou inversement.

L'organe de déclenchement relais 42 et l'organe de déclenchement magnétique 38 sont configurés pour agir mécaniquement sur la serrure 50 pour passer de la position d'enclenchement à la position de sectionnement quand se produisent des conditions de cheminement de courant prédéterminées.

L'organe de déclenchement magnétique 38 agit sur la serrure 50 en cas de court-circuit.

L'organe de déclenchement relais 42 agit sur la serrure 50 en cas de défaut différentiel prédéterminé détecté grâce au transformateur 35 ou en cas de surintensité prolongée prédéterminée en valeur et en durée, détectée grâce au transformateur 37.

En cas de défaut différentiel prédéterminé, l'enroulement 33 du transformateur 35 procure, via les conducteurs 40, 24, 43 et la diode 41, suffisamment d'énergie aux points de raccordement de l'organe de déclenchement relais 42 pour que le percuteur de l'organe 42 agisse mécaniquement sur la serrure 50 en la faisant passer de la position d'enclenchement à la position de sectionnement.

Le circuit électronique 49 réagit à la tension fournie par l'enroulement secondaire 44 du transformateur 37.

Cette tension est présente entre les points de raccordement d'entrée du circuit électronique 49 du fait que ces points de raccordement d'entrée sont reliés, par les conducteurs 46 et 47, aux extrémités de l'enroulement 44.

En cas de surintensité prolongée prédéterminée en valeur et en durée, le circuit électronique 49 procure, via les conducteurs 51, 25, 52 et la diode 48, suffisamment d'énergie aux points de raccordement de l'organe de déclenchement relais 42 pour que le percuteur de l'organe 42 agisse mécaniquement sur la serrure 50 en la faisant passer de la position d'enclenchement à la position de sectionnement.

Les diodes 41 et 48 servent d'anti-retour et de protection contre les surcharges.

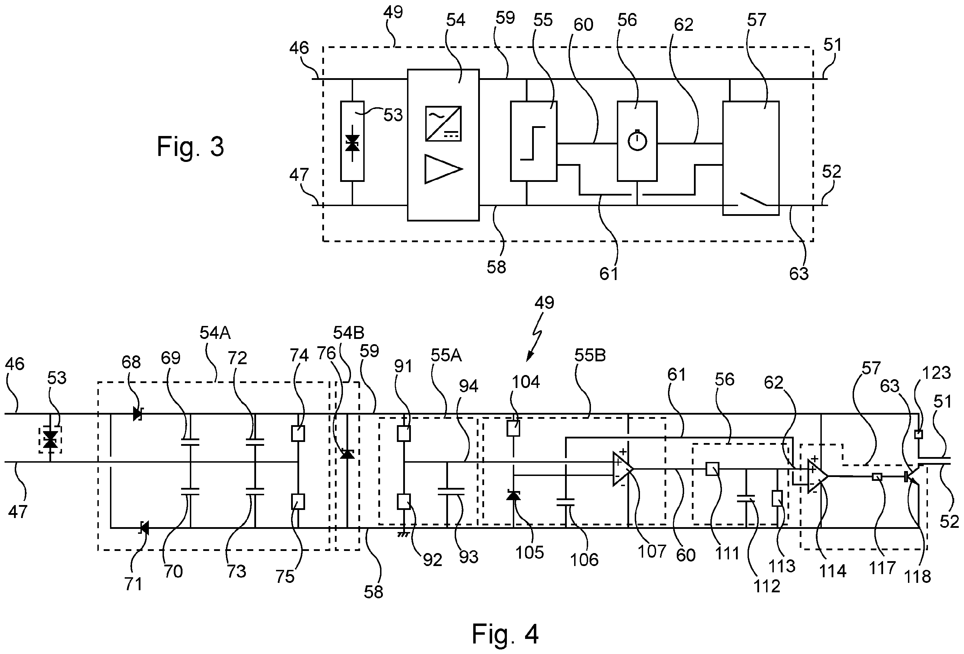

On va maintenant décrire le circuit électronique 49 à l'appui des figures 3 et 4.

Comme on le voit sur la figure 3 le circuit électronique 49 comporte entre ses points de raccordement d'entrée (auxquels arrivent les conducteurs 46 et 47) et ses points de raccordement de sortie (dont partent les conducteurs 51 et 52) successivement : un étage de protection 53, un étage redresseur-accumulateur 54, un étage comparateur 55, un étage d'intégration temps-tension 56 et un étage de commutation 57.

L'étage de protection 53 présente deux points de raccordement et est disposé en parallèle de l'enroulement secondaire 44 du transformateur 37 de détection de surintensité.

L'étage 53 sert à protéger le circuit électronique 49 quand se produit une surintensité extrême dans le circuit de cheminement de courant entre les bornes 22 et 26, notamment en raison d'un transitoire ou d'un court-circuit dans l'installation raccordée au disjoncteur 10, la surintensité extrême dans l'enroulement primaire 36 générant une surtension extrême aux extrémités de l'enroulement secondaire 44.

L'étage 53 est ici formé par une diode Transil^{®} bidirectionnelle disposée entre les deux points de raccordement d'entrée du circuit 49, c'est-à-dire qu'un conducteur relie l'un des deux points de raccordement de la diode Transil^{®} au point de raccordement d'entrée du circuit 49 auquel est relié le conducteur 46 et qu'un autre conducteur relie l'autre point de raccordement de la diode Transil^{®} au point de raccordement d'entrée du circuit 49 auquel est relié le conducteur 47.

En variante, l'étage de protection 53 est configuré différemment, par exemple en étant formé d'un composant parasurtenseur différent d'une diode Transil^{®}, tel qu'une varistance.

L'étage redresseur-accumulateur 54 présente deux points de raccordement d'entrée et deux points de raccordement de sortie.

Les deux points de raccordement d'entrée sont reliés à l'enroulement 44 pour que l'étage 54 soit soumis à la tension alternative existant aux extrémités de l'enroulement 44, qui est représentative du courant circulant dans l'enroulement primaire 36 et donc dans le circuit de cheminement de courant entre les bornes 22 et 26.

Pour ce faire, un conducteur relie l'un des deux points de raccordement d'entrée de l'étage 54 au point de raccordement d'entrée du circuit 49 auquel est relié le conducteur 46 et un autre conducteur relie l'autre des deux points de raccordement d'entrée de l'étage 54 au point de raccordement d'entrée du circuit 49 auquel est relié le conducteur 47.

La tension alternative existant aux extrémités de l'enroulement 44 est convertie par l'étage 54 en tension continue.

De même que la tension alternative existant aux extrémités de l'enroulement 44 est représentative de l'intensité du courant circulant dans l'enroulement primaire 36 (et donc dans le circuit de cheminement de courant entre les bornes 22 et 26), la tension continue fournie par l'étage 54 est représentative de l'intensité du courant circulant dans l'enroulement primaire 36.

Les points de raccordement de sortie de l'étage 54 sont à l'un et l'autre des pôles de la tension continue fournie par l'étage 54.

L'un des points de raccordement de sortie de l'étage 54, qui est pôle -, est relié à un conducteur 58 qui est au potentiel de référence de la partie en courant continu du circuit 49 (partie située entre l'étage 54 et les points de raccordement de sortie du circuit 49).

L'autre point de raccordement de sortie de l'étage 54, qui est au pôle +, est relié à un conducteur 59.

En outre de convertir la tension alternative existant aux extrémités de l'enroulement 44 en tension continue, l'étage 54 accumule de l'énergie provenant de l'enroulement 44.

Grâce à cette accumulation, l'étage 54 peut fournir si besoin à l'organe de déclenchement relais 42 suffisamment d'énergie électrique pour que le percuteur de l'organe 42 agisse mécaniquement sur la serrure 50 en la faisant passer de la position d'enclenchement à la position de sectionnement.

L'étage comparateur 55 est relié au conducteurs 58 (pôle -) et au conducteur 59 (pôle +).

Cela permet à l'étage 55, d'une part, d'être alimenté en tension continue et, d'autre part, de connaître l'intensité du courant circulant dans le circuit de cheminement entre les bornes 22 et 26 puisque, comme indiqué ci-dessus, la tension continue fournie par l'étage 54 est représentative de cette intensité.

L'étage 55 est également relié à un conducteur 60 et à un conducteur 61.

L'étage 55 fournit sur le conducteur 60 un signal de dépassement ou de non-dépassement d'un seuil prédéterminé d'intensité de courant dans le circuit de cheminement entre les bornes 22 et 26, ce qui correspond au dépassement ou au non-dépassement d'un seuil prédéterminé de différence de potentiel entre les conducteurs 59 et 58.

Ici, le signal fourni sur le conducteur 60 est la différence de potentiel (tension) vis-à-vis du conducteur 58.

Le signal de non-dépassement est un niveau bas constant prédéterminé de cette tension. Le signal de dépassement est un niveau haut de cette tension, variant comme la tension continue fournie par l'étage 54 sur les conducteurs 58 et 59.

Pour ce faire, l'étage 55 comporte un comparateur de tension avec un seuil positif prédéterminé. Si la différence de potentiel entre le conducteur 59 et le conducteur 58 est-en-dessous du seuil prédéterminé, le comparateur de tension met le conducteur 60 au niveau bas de tension. Si la différence de potentiel entre le conducteur 59 et le conducteur 58 est-au-dessus du seuil prédéterminé, le comparateur de tension met le conducteur 60 au niveau haut.

Dans l'exemple illustré, comme expliqué ci-après à l'appui de la figure 4, le conducteur 60 est mis au potentiel du conducteur 58 si la différence de potentiel entre le conducteur 59 et le conducteur 58 est-en-dessous du seuil prédéterminé tandis que le conducteur 60 est mis au potentiel du conducteur 59 si la différence de potentiel entre le conducteur 59 et le conducteur 58 est au-dessus du seuil prédéterminé.

Ainsi, le niveau bas de tension formant le signal de non-dépassement est le niveau zéro et le niveau haut de tension formant le signal de dépassement est la tension continue fournie par l'étage 54 dès lors que cette tension est au-dessus du seuil prédéterminé.

En variante, le niveau bas constant prédéterminé est différent du niveau zéro et/ou le niveau haut variant comme la tension continue fournie par l'étage 54 est différent de cette tension continue.

Dans l'exemple illustré, l'étage 55 fournit sur le conducteur 61 un niveau de tension de référence : la différence de potentiel entre le conducteur 61 et le conducteur 58 est préfixée à une valeur de référence constante.

Ce niveau de tension de référence est utilisé par l'étage 55 pour déterminer si la différence de potentiel entre le conducteur 59 et le conducteur 58 est ou non au-dessus du seuil prédéterminé.

Dans l'exemple illustré, l'étage de commutation 57 utilise également ce niveau de tension de référence, dont il dispose grâce au conducteur 61, auquel il est relié.

L'étage d'intégration temps-tension 56 est relié au conducteur 60 et au conducteur 58.

L'étage 56 est également relié à un conducteur 62 sur lequel il fournit un signal d'intégration temps-tension ayant un niveau représentatif de la survenance ou de la non-survenance d'une surintensité prédéterminée en valeur et en durée dans l'enroulement primaire 36 du transformateur 37 et donc dans les circuits de cheminement de courant du disjoncteur 10.

L'étage 56 est configuré pour que le niveau du signal d'intégration augmente lorsque l'étage comparateur 55 se met à fournir le signal de dépassement alors qu'il fournissait le signal de non-dépassement et diminue lorsque l'étage comparateur 55 se met à fournir le signal de non-dépassement alors qu'il fournissait le signal de dépassement.

Ici, le niveau du signal d'intégration est un niveau de tension, à savoir la différence de potentiel entre le conducteur 62 et le conducteur 58.

Lorsque le niveau du signal d'intégration augmente, le degré d'augmentation dépend du niveau du signal de dépassement, et donc du niveau de la tension continue fournie par l'étage 54 puisqu'ici le conducteur 60 est mis au potentiel du conducteur 59 lorsque le l'étage 55 fournit le signal de dépassement.

Afin que le signal d'intégration ait des performances élevées en matière de représentativité de la survenance ou de la non-survenance d'une surintensité prédéterminée en valeur et en durée, l'étage 56 est alimenté en tension exclusivement par les conducteurs 58 et 60.

On observera à ce sujet qu'aucun conducteur ne relie l'étage 56 au conducteur 59.

L'étage de commutation 57 est relié aux conducteurs 58, 59, 61 et 62 ainsi qu'à un conducteur 63 relié au point de raccordement de sortie du circuit 49 auquel est relié le conducteur 52.

Le conducteur 59 est relié au point de sortie du circuit 49 auquel est relié le conducteur 51.

En pratique, comme montré sur la figure 4, une résistance de limitation de courant 123 est disposée entre le conducteur 59 et le point de raccordement de sortie du circuit 49 auquel est relié le conducteur 51, mais pour simplifier on ne tient pas compte de la résistance 123 dans les explications qui suivent.

Lorsque le signal d'intégration fourni par l'étage 56 à l'étage 57 via le conducteur 62 a un niveau représentatif de la non-survenance d'une surintensité prédéterminée, l'étage de commutation 57 isole le conducteur 63 (et donc le conducteur 52) du conducteur 58. L'organe de déclenchement relais 42 n'est donc pas alimenté par l'étage 54 et le mécanisme de commande 50 reste en position d'enclenchement.

Lorsque le signal d'intégration atteint un niveau représentatif de la survenance d'une surintensité prédéterminée, l'étage de commutation 57 se met à relier le conducteur 63 (et donc le conducteur 52) au conducteur 58, l'organe 42 se met à être alimenté par l'étage 54, et en conséquence l'organe 42 agit sur le mécanisme 50 pour le faire passer en position de sectionnement.

La liaison de l'étage 57 aux conducteurs 58 et 59 permet d'alimenter l'étage 57. La liaison de l'étage 57 aux conducteurs 61 et 62 permet à l'étage 57 de savoir si le signal d'intégration a atteint ou non le niveau représentatif de la survenance d'une surintensité prédéterminée.

Dans l'exemple illustré, l'étage 57 se sert du niveau de tension de référence fourni par l'étage 55 via le conducteur 61, ce qui permet d'éviter d'avoir à prévoir dans l'étage 57 des composants pour produire ce niveau de tension de référence.

En variante, l'étage 57 comporte ses propres composants pour disposer d'un niveau de tension de référence et le conducteur 61 est supprimé.

On va maintenant décrire plus en détails les étages 54, 55, 56 et 57 à l'appui de la figure 4.

L'étage redresseur-accumulateur 54 comporte un sous-étage redresseur-accumulateur 54A qui effectue le redressement et l'accumulation proprement dits et un sous-étage de protection 54B qui protège les étages situés en aval, c'est-à-dire les étages 55, 56 et 57.

Le sous-étage 54A comporte une première diode 68, un premier condensateur 69, un deuxième condensateur 70 et une deuxième diode 71. Les diodes 68 et 71 sont ici des diodes Zener.

L'anode de la diode 68 est reliée au point d'entrée du circuit 49 auquel est relié le conducteur 46. La cathode de la diode 68 est reliée au point de sortie de l'étage 54 auquel est relié le conducteur 59 et à l'une des bornes du condensateur 69.

L'autre borne du condensateur 69 est reliée au point d'entrée du circuit 49 auquel est relié le conducteur 47 ainsi qu'à l'une des bornes du condensateur 70.

L'autre borne du condensateur 70 est reliée à l'anode de la diode 71 et au point de sortie de l'étage 54 relié au conducteur 58. La cathode de la diode 71 est reliée à l'anode de la diode 68 et donc au conducteur 46.

On voit que les diodes 68 et 71 et les condensateurs 69 et 70 forment un pont redresseur et doubleur de tension de LATOUR.

En parallèle du condensateur 69 sont disposés un condensateur d'accumulation 72 et une résistance 74.

En parallèle du condensateur 70 sont disposés un autre condensateur d'accumulation 73 et une autre résistance 75.

Les condensateurs 72 et 73 permettent à l'étage 54 d'accumuler de l'énergie provenant de l'enroulement 44 du transformateur 37 et si besoin de fournir cette énergie à l'organe de déclenchement relais 42.

Les résistances 74 et 75 sont utiles à la présence d'une tension aux points de raccordement de sortie de l'étage 54.

On observera que grâce au caractère doubleur de tension de l'étage 54, le circuit 49 est utilisable avec une tension relativement faible entre les deux extrémités de l'enroulement 44 du transformateur 37.

Le sous-étage 54B est formé par une diode Zener 76. L'anode de la diode 76 est reliée au point de raccordement de sortie de l'étage 54 auquel est relié le conducteur 58. La cathode de la diode 76 est reliée au point de raccordement de sortie de l'étage 54 auquel est relié le conducteur 59.

L'étage comparateur 55 comporte un sous-étage de mise en forme 55A et un sous-étage comparateur 55B.

Le sous-étage de mise en forme 55A comporte une résistance 91, une autre résistance 92 et un condensateur 93.

Les résistances 91 et 92 sont disposées en série entre les conducteurs 59 et 58 : une première borne de la résistance 91 est reliée au conducteur 59, la seconde borne de la résistance 91 est reliée à une première borne de la résistance 92 et la seconde borne de la résistance 92 est reliée au conducteur 58.

Le condensateur 93 est disposé en parallèle de la résistance 92 : une première borne du condensateur 93 est reliée à la première borne de la résistance 92 et la seconde borne du condensateur 93 est reliée au conducteur 58.

Un conducteur 94 est relié à la seconde borne de la résistance 91, à la première borne de la résistance 92 et à la première borne du condensateur 93.

La résistance 91 et la résistance 92 forment un pont diviseur de la tension existant entre les conducteurs 59 et 58. La tension de sortie est entre les bornes de la résistance 92 et donc entre le conducteur 94 et le conducteur 58.

Le condensateur 93 est configuré pour effectuer un lissage.

Pour changer le calibre du disjoncteur 10, il suffit de changer le rapport de division du pont formé par les résistances 91 et 92.

Le sous-étage comparateur 55B comporte une résistance 104, une diode Zener 105, un condensateur 106 et un amplificateur opérationnel 107.

La résistance 104 est reliée par une première borne au conducteur 59 et par une seconde borne à la cathode de la diode 105. L'anode de la diode 105 est reliée au conducteur 58.

Le condensateur 106 est disposé en parallèle de la diode 105 : une première borne du condensateur 106 est reliée à la cathode de la diode 105 et la seconde borne du condensateur 106 est reliée au conducteur 58.

Le conducteur 61 est relié à la cathode de la diode 105.

Comme indiqué ci-dessus, l'étage 55 fournit sur le conducteur 61 un niveau de tension de référence : la différence de potentiel entre le conducteur 61 et le conducteur 58 est préfixée à une valeur de référence constante.

C'est la diode 105 qui fixe cette valeur de référence, par exemple 1,2 V.

La résistance 104 sert à limiter le courant dans la diode 105. Le condensateur 106 sert à opérer un lissage.

L'entrée négative de l'amplificateur opérationnel 107 est reliée à la cathode de la diode 105. L'amplificateur opérationnel 107 dispose ainsi d'un niveau de tension de référence positif.

L'entrée positive de l'amplificateur opérationnel 107 est reliée au conducteur 94.

La borne d'alimentation positive de l'amplificateur opérationnel 107 est reliée au conducteur 59.

La borne d'alimentation négative de l'amplificateur opérationnel 107 est reliée au conducteur 58.

La sortie de l'amplificateur opérationnel 107 est reliée au conducteur 60.

On voit que l'amplificateur opérationnel 107 est monté en comparateur à seuil positif : si la différence de potentiel entre le conducteur 94 et le conducteur 58 est plus petite que la valeur de référence fixée par la diode 105, le conducteur 60 est mis au potentiel du conducteur 58 ; et si la différence de potentiel entre le conducteur 94 et le conducteur 58 est plus grande que la valeur de référence fixée par la diode 105, le conducteur 60 est mis au potentiel du conducteur 59.

La diode Zener 105 et le pont diviseur formé par les résistances 91 et 92 permettent de prédéterminer un seuil de la différence de potentiel entre le conducteur 59 et le conducteur 58 : en-dessous de ce seuil, le conducteur 60 est mis au potentiel du conducteur 58 et au-dessus de ce seuil le conducteur 60 est mis au potentiel du conducteur 59.

En pratique, ce seuil est déterminé en fonction du calibre (ou intensité nominale) du disjoncteur 10 et de la caractéristique temps-courant que doit avoir ce disjoncteur, c'est-à-dire de la surintensité prédéterminée en valeur et en durée à laquelle le disjoncteur 10 doit déclencher (c'est-à-dire que son mécanisme 50 doit passer de la position d'enclenchement à la position de sectionnement).

Par exemple, si la caractéristique temps-courant du disjoncteur 10 est qu'il ne doit pas déclencher pour un courant de 1,13 fois le calibre alors qu'il doit déclencher pour un courant de 1,45 fois le calibre maintenu pendant une durée prédéterminée (par exemple 25 s), le seuil prédéterminé de la différence de potentiel entre le conducteur 59 et le conducteur 58 peut être sélectionné comme étant la valeur de cette différence de potentiel pour laquelle le courant circulant dans l'enroulement primaire 36 du transformateur 37 est d'un peu plus que 1,13 fois le calibre, par exemple 1,3 fois le calibre.

Si l'on prend l'exemple mentionné ci-dessus pour la valeur de référence fixée par la diode 105, à savoir 1,2 V, les résistances 91 et 92 sont sélectionnées pour que la différence de potentiel entre le conducteur 94 et le conducteur 58 soit de 1,2 V quand le courant circulant dans l'enroulement primaire 36 du transformateur 37 est de 1,3 fois le calibre.

Par exemple, si la différence de potentiel entre le conducteur 59 et le conducteur 58 est de 2 V quand le courant circulant dans l'enroulement primaire 36 est le calibre, les résistances 91 et 92 sont sélectionnées pour que la différence de potentiel entre le conducteur 94 et le conducteur 58 soit de 1,2 V quand la différence de potentiel entre le conducteur 59 et le conducteur 58 est de 1,3 fois 2 V soit 2,6 V.

Dans cet exemple, quand le courant circulant dans l'enroulement primaire 36 est de 1,45 fois calibre, la différence de potentiel entre le conducteur 59 et le conducteur 58 est de 1,45 fois 2 V soit 2,9 V et la différence de potentiel entre le conducteur 94 et le conducteur 58 est de 2,9 x 1,2/2,6 = 1,34 V.

L'étage d'intégration temps-tension 56 comporte une résistance 111, un condensateur 112 et une autre résistance 113.

Une première borne de la résistance 111 est reliée au conducteur 60.

La seconde borne de la résistance 111 est reliée à une première borne du condensateur 112.

La seconde borne du condensateur 112 est reliée au conducteur 58.

La résistance 113 est disposée en parallèle du condensateur 112 : une première borne de la résistance 113 est reliée à la première borne du condensateur 112 et la seconde borne de la résistance 113 est reliée au conducteur 58.

Quand le condensateur 112 est déchargé et que le conducteur 60 est mis au potentiel du conducteur 59, le condensateur 112 se charge avec une constante de temps qui dépend de la capacité du condensateur 112 et de la valeur des résistances 111 et 113, qui forment un pont diviseur de tension.

Quand le condensateur 112 est chargé au moins partiellement et que le conducteur 60 est mis au potentiel du conducteur 58, le condensateur 112 se décharge essentiellement via la résistance 113.

La valeur de la résistance 113 est sélectionnée pour que la décharge du condensateur 112 soit quasi-instantanée, par exemple 0,5 s.

Comme indiqué ci-dessus, l'étage 56 fournit sur le conducteur 62 un signal d'intégration temps-tension ayant un niveau représentatif de la survenance ou de la non-survenance de la surintensité prédéterminée en valeur et en durée dans l'enroulement primaire 36, le niveau du signal d'intégration étant la différence de potentiel entre le conducteur 62 et le conducteur 58.

Pour ce faire, le conducteur 62 est relié à la première borne du condensateur 112.

Le niveau du signal d'intégration est ainsi la tension aux bornes du condensateur 112.

C'est ainsi que l'étage 56 est configuré pour que le niveau du signal d'intégration augmente lorsque l'étage comparateur 55 se met à fournir le signal de dépassement alors qu'il fournissait le signal de non-dépassement (le condensateur 112 se met à se charger alors qu'il était au moins partiellement déchargé) ; et pour que le niveau du signal d'intégration diminue lorsque l'étage comparateur 55 se met à fournir le signal de non-dépassement alors qu'il fournissait le signal de dépassement (le condensateur 112 se met à se décharger alors qu'il était au moins partiellement chargé).

Le degré d'augmentation dans le temps du niveau du signal d'intégration (tension aux bornes du condensateur 112) dépend de l'évolution dans le temps du niveau du signal du signal de dépassement (différence de potentiel entre le conducteur 60 et le conducteur 58).

Si par exemple le niveau du signal de dépassement est croissant, le niveau du signal d'intégration va augmenter plus vite que si le niveau du signal de dépassement est constant.

La valeur des résistances 111 et 113 et la capacité du condensateur 112 sont sélectionnés pour que la tension aux bornes du condensateur 112 atteigne un seuil prédéterminé au bout du temps prévu par la caractéristique temps-courant du disjoncteur 10.

Dans l'exemple illustré, comme expliqué ci-dessus, ce seuil prédéterminé est la valeur de référence fixée par la diode 105, disponible sur le conducteur 61.

Dans l'exemple mentionné ci-dessus, la caractéristique temps-courant du disjoncteur 10 est telle que le disjoncteur 10 doit déclencher pour un courant de 1,45 fois le calibre lorsque ce courant a été maintenu pendant 25 s ; et quand le courant circulant dans l'enroulement primaire 36 est 1,45 fois le calibre, la différence de potentiel entre le conducteur 59 et le conducteur 58 est de 2,9 V.

Comme indiqué ci-dessus, le niveau haut de tension formant le signal de dépassement est la différence de potentiel entre le conducteur 59 et le conducteur 58.

Ainsi, dans cet exemple, la valeur des résistances 111 et 113 et la capacité du condensateur 112 sont sélectionnés pour que, à partir d'un état déchargé du condensateur 112, la tension aux bornes du condensateur 112 atteigne la tension de référence fixée par la diode 105 (1,2 V dans l'exemple ci-dessus) au bout d'un temps prédéterminé (25 s dans l'exemple ci-dessus) après que la différence de potentiel entre le conducteur 60 et le conducteur 58 a été mise et maintenue à la valeur que prend la différence de potentiel entre le conducteur 59 et le conducteur 58 quand le courant circulant dans l'enroulement primaire 36 du transformateur 37 est de 1,45 fois le courant nominal (2,9 V dans l'exemple ci-dessus).

L'étage de commutation 57 comporte un amplificateur opérationnel 114, une résistance 117 et un transistor 118.

L'entrée positive de l'amplificateur opérationnel 114 est reliée au conducteur 62.

L'entrée négative de l'amplificateur opérationnel 114 est reliée au conducteur 61.

La borne d'alimentation positive de l'amplificateur opérationnel 114 est reliée au conducteur 59.

La borne d'alimentation négative de l'amplificateur opérationnel 114 est reliée au conducteur 58.

La sortie de l'amplificateur opérationnel 114 est reliée à l'une des bornes de la résistance 117.

L'autre borne de la résistance 117 est reliée à la base du transistor 118.

L'émetteur du transistor 118 est relié au conducteur 58. Le collecteur du transistor 118 est relié au conducteur 63.

La résistance 117 sert à la polarisation du transistor 118, qui est monté en commutation.

Si la différence de potentiel entre le conducteur 62 et le conducteur 58 est plus petite que la valeur de référence fixée par la diode 105, la sortie de l'amplificateur opérationnel 114 est au potentiel du conducteur 58 et le transistor 118 est bloqué, de sorte que l'organe de déclenchement relais 42 n'est pas alimenté par l'étage 54.

Si la différence de potentiel entre le conducteur 62 et le conducteur 58 est plus grande que la valeur de référence fixée par la diode 105, la sortie de l'amplificateur opérationnel 114 est au potentiel du conducteur 59, le transistor 118 est passant et l'organe de déclenchement relais 42 est alimenté par l'étage 54.

Comme indiqué ci-dessus, le circuit 49 comporte également une résistance 123 disposée entre le conducteur 59 et le point de raccordement de sortie du circuit 49 auquel est relié le conducteur 51.

Le résistance 123 sert à limiter le courant en cas de court-circuit entre les points de raccordement de sortie du circuit 49.

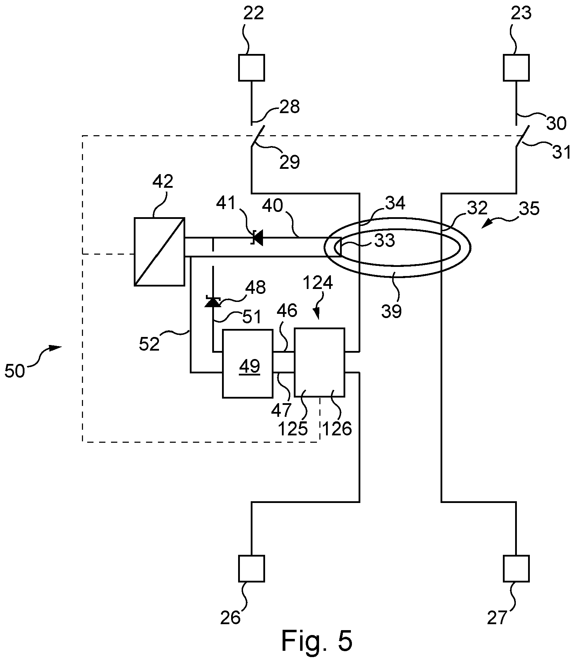

La figure 5 montre une variante du circuit électrique de la figure 2, dans laquelle le transformateur 37 de détection de surintensité et l'organe de déclenchement magnétique 38 ont été remplacés par un organe compact 124 comportant un relais de déclenchement 125 et un organe de déclenchement magnétique 126.

Un tel organe compact est décrit dans la demande de brevet français 3 046 289.

L'organe de déclenchement magnétique 126, de même que l'organe de déclenchement magnétique 38, est formé par une bobine de déclenchement magnétique disposée autour d'un noyau mobile commandant un percuteur agissant en cas de court-circuit sur le mécanisme de commande 50.

Le relais de déclenchement 125 est formé par une bobine de relais de déclenchement disposée autour du noyau mobile.

La bobine de déclenchement magnétique et la bobine de relais de déclenchement sont disposées l'une autour de l'autre.

Ici, la bobine de déclenchement magnétique est disposée autour de la bobine de relais de déclenchement.

Le fait que les deux enroulements que constituent la bobine de déclenchement magnétique et la bobine de relais de déclenchement soient disposés l'un autour de l'autre produit un effet de transformateur, c'est-à-dire que le courant circulant dans la bobine de déclenchement magnétique induit un courant dans la bobine de relais de déclenchement du fait du couplage électromagnétique des deux bobines par l'air.

Dans la variante illustrée sur la figure 5, entre l'enroulement 34 et la borne 26, on a l'organe de déclenchement magnétique 126 au lieu d'avoir en série l'enroulement 36 et l'organe de déclenchement magnétique 38 ; et les deux conducteurs 46 et 47 sont reliés aux deux extrémités de la bobine du relais de déclenchement 125 au lieu des deux extrémités de l'enroulement 44.

On notera que le relais de déclenchement 125 est configuré pour entrainer le noyau mobile de l'organe compact 124 s'il est alimenté de façon appropriée, mais que cette capacité n'est pas utilisée ici, le relais de déclenchement 125 n'étant utilisé que pour jouer le même rôle que l'enroulement 44.

Dans des variantes non illustrées :
- l'étage d'intégration temps-tension 56 est agencé différemment, par exemple avec des composants numériques plutôt qu'analogiques ;
- l'étage de commutation 57 est agencé différemment, par exemple avec un organe de commutation électronique différent d'un transistor, tel qu'un thyristor ;
- l'étage comparateur 55 est agencé différemment, par exemple avec des composants numériques plutôt qu'analogiques ;
- l'étage redresseur-accumulateur 54 est agencé différemment, par exemple avec un pont redresseur différent d'un pont de LATOUR, tel qu'un pont de GRAETZ ;
- un circuit électronique d'interface est disposé entre l'enroulement secondaire 33 du transformateur 35 et l'organe de déclenchement relais 42 ; avec éventuellement la diode 41 qui fait partie de la même carte électronique que ce circuit d'interface ;
- la diode 48 est disposée une même carte électronique que le circuit 49 ;
- l'organe de déclenchement magnétique tel que 38 est supprimé ;
- le condensateur de lissage 93 et/ou le condensateur de lissage 106 sont supprimés ;
- le contact fixe 30 et le contact mobile 31 sont supprimés ;
- le circuit de cheminement de courant du pôle protégé est à droite plutôt qu'à gauche tandis que le circuit de cheminement de courant du pôle non protégé est à gauche plutôt qu'à droite ;
- le borne d'arrivée sont en bas plutôt qu'en haut et les bornes de départ sont en haut plutôt qu'e bas ; et/ou
- l'appareil de protection a une largeur différente et/ou un nombre de pôles différents, par exemple un appareil tétrapolaire d'une largeur de 4 modules comportant quatre bornes en partie supérieure et quatre bornes en partie inférieure.

De nombreuses autres variantes sont possibles en fonction des circonstances et l'on rappelle à cet égard que l'invention ne se limite pas aux exemples décrits et représentés.

## Revendications

1. Appareil électrique de protection d'une installation électrique en courant alternatif, ayant une première borne d'arrivée (22) pour un premier pôle électrique, une deuxième borne d'arrivée (23) pour un deuxième pôle électrique différent du premier pôle électrique, une première borne de départ (26) pour le premier pôle électrique et une deuxième borne de départ (27) pour le deuxième pôle électrique ; lequel appareil (10) comporte :
- un premier circuit de cheminement de courant entre la première borne d'arrivée (22) et la première borne de départ (26), comportant un contact fixe (28) et un contact mobile (29) ;
- un deuxième circuit de cheminement de courant entre la deuxième borne d'arrivée (23) et la deuxième borne de départ (27) ;
- un mécanisme de commande (50) dudit contact mobile (29) ayant deux positions stables, respectivement une position de sectionnement où ledit contact mobile (29) est à l'écart dudit contact fixe (28) et une position d'enclenchement où ledit contact mobile (29) est en appui sur ledit contact fixe (28);
- un premier transformateur électrique (35), comportant un premier enroulement primaire (34) faisant partie dudit premier circuit de cheminement, un deuxième enroulement primaire (32) faisant partie dudit deuxième circuit de cheminement et un enroulement secondaire (33) grâce auquel peut être détecté un défaut différentiel prédéterminé entre lesdits premier circuit de cheminement et deuxième circuit de cheminement ;
- un organe de déclenchement relais (42) configuré pour agir sur ledit mécanisme de commande (50) pour le faire passer de ladite position d'enclenchement à ladite position de sectionnement quand il est alimenté d'une façon prédéterminée, ledit organe de déclenchement relais (42) et ledit premier transformateur électrique (35) étant reliés l'un à l'autre et configurés pour que, quand se produit ledit défaut différentiel prédéterminé, ledit organe de déclenchement relais (42) est alimenté de ladite façon prédéterminée par de l'énergie provenant exclusivement dudit enroulement secondaire (33) dudit premier transformateur électrique (35) ;
- un deuxième transformateur électrique (37 ; 124), comportant un enroulement primaire (36 ; 126) faisant partie dudit premier circuit de cheminement ou dudit deuxième circuit de cheminement et un enroulement secondaire (44 ; 125) grâce auquel peut être détectée l'intensité du courant circulant dans ledit enroulement primaire (36 ; 126) ;
- un circuit électronique (49) disposé entre ledit enroulement secondaire (44) dudit deuxième transformateur électrique (37) et ledit organe de déclenchement relais (42), configuré pour que ledit organe de déclenchement relais (42) soit alimenté de ladite façon prédéterminée par de l'énergie provenant exclusivement dudit enroulement secondaire (44) dudit deuxième transformateur (37) lorsque se produit une surintensité prolongée prédéterminée en valeur et en durée dans ledit enroulement primaire (36) dudit deuxième transformateur (37), comportant :
- un étage redresseur-accumulateur (54) ayant deux points de raccordement d'entrée reliés respectivement à une première extrémité dudit enroulement secondaire (44) dudit deuxième transformateur (37) et à une deuxième extrémité dudit enroulement secondaire (44) dudit deuxième transformateur (37) et ayant deux points de raccordement de sortie reliés respectivement à un premier conducteur (58) et à second conducteur (59) entre lesquels existe une tension continue représentative de ladite intensité du courant circulant dans ledit enroulement primaire (36) dudit deuxième transformateur (37) ;
- un étage comparateur (55) configuré pour fournir un signal de dépassement ou de non-dépassement d'un seuil prédéterminé de ladite tension continue représentative ;
- un étage d'intégration temps-tension (56) configuré pour fournir un signal d'intégration temps-tension ayant un niveau représentatif de la survenance ou de la non-survenance d'une surintensité prédéterminée en valeur et en durée dans l'enroulement primaire (36) dudit deuxième transformateur (37), le niveau dudit signal d'intégration augmentant lorsque ledit étage comparateur (55) se met à fournir ledit signal de dépassement alors qu'il fournissait ledit signal de non-dépassement, avec le degré d'augmentation du niveau du signal d'intégration qui dépend de ladite tension continue représentative, le niveau dudit signal d'intégration diminuant lorsque ledit étage comparateur (55) se met à fournir ledit signal de non-dépassement alors qu'il fournissait ledit signal de dépassement ; et
- un étage de commutation (57), configuré pour isoler ledit organe de déclenchement relais (42) d'au moins un des dits premier conducteur (58) et second conducteur (59) afin que ledit organe de déclenchement relais (42) ne soit pas alimenté de ladite façon prédéterminée quand ledit signal d'intégration a un niveau représentatif de la non-survenance d'une dite surintensité prédéterminée et pour relier ledit organe de déclenchement relais (42) avec lesdits premier conducteur (58) et second conducteur (59) afin que ledit organe de déclenchement relais (42) soit alimenté de ladite façon prédéterminée quand ledit signal d'intégration a un niveau représentatif de la survenance d'une dite surintensité prédéterminée ;
**caractérisé en ce que** ledit étage d'intégration temps-tension (56) est alimenté en tension exclusivement par deux conducteurs (58, 60) entre lesquels est fourni par ledit étage comparateur (55) un niveau de tension formant ledit signal de dépassement ou de non-dépassement, ledit signal de non-dépassement étant un niveau de tension bas constant prédéterminé, ledit signal de dépassement étant un niveau de tension haut variant comme ladite tension continue représentative.

2. Appareil selon la revendication 1, **caractérisé en ce que** ledit étage d'intégration temps-tension (56) comporte une première résistance (111), un condensateur (112) et une seconde résistance (113), une première borne de la première résistance (111) étant reliée à un premier (60) desdits deux conducteur (58, 60) entre lesquels est fourni ledit niveau de tension formant ledit signal de dépassement ou de non-dépassement, la seconde borne de la première résistance (111) étant reliée à une première borne du condensateur (112), la seconde borne du condensateur (112) étant reliée au second (58) desdits deux conducteur (58, 60) entre lesquels est fourni ledit niveau de tension formant ledit signal de dépassement ou de non-dépassement, la seconde résistance (113) étant disposée en parallèle du condensateur (112), ladite première borne du condensateur (112) étant relié à un conducteur de signal d'intégration (62) sur lequel ledit étage d'intégration temps-tension (56) fournit ledit signal d'intégration temps-tension, ledit niveau du signal d'intégration temps-tension étant la différence de potentiel entre ledit conducteur de signal d'intégration (62) et ledit second conducteur (58) desdits deux conducteur (58, 60) entre lesquels est fourni ledit niveau de tension formant ledit signal de dépassement ou de non-dépassement.

3. Appareil selon l'une quelconque des revendications 1 ou 2, **caractérisé en ce que** ledit étage comparateur (55) comporte un amplificateur opérationnel (107) monté en comparateur à seuil positif, la borne d'alimentation négative dudit amplificateur opérationnel (107) étant reliée audit premier conducteur (58), la borne d'alimentation positive dudit amplificateur opérationnel (107) étant reliée audit second conducteur (59), la sortie dudit amplificateur opérationnel (107) étant reliée à un conducteur (60) de signal de dépassement ou de non-dépassement, lesdits deux conducteurs entre lesquels est fourni par ledit étage comparateur (55) un niveau de tension formant ledit signal de dépassement ou de non-dépassement étant ledit conducteur (60) de signal de dépassement ou de non-dépassement et ledit premier conducteur (58), ledit niveau de tension bas constant prédéterminé formant ledit signal de non-dépassement étant le niveau zéro, ledit niveau de tension haut variant comme ladite tension continue représentative formant ledit signal de dépassement étant ladite tension continue représentative.

4. Appareil selon la revendication 3, **caractérisé en ce que** ledit étage comparateur (55) comporte en outre une résistance (104) et une diode Zener (105), ladite résistance (104) étant reliée par une première borne audit second conducteur (59) et par une seconde borne à la cathode de ladite diode Zener (105) dont l'anode est reliée audit premier conducteur (58), l'entrée négative de l'amplificateur opérationnel (107) étant reliée à la cathode de ladite diode Zener (105), grâce à quoi la différence de potentiel entre l'entrée négative de l'amplificateur opérationnel (107) et ledit premier conducteur (58) est maintenue par ladite diode Zener (105) à une valeur de référence constante préfixée.

5. Appareil selon l'une quelconque des revendications 3 ou 4, **caractérisé en ce que** ledit étage comparateur (55) comporte un sous-étage (55A) de mise en forme comportant une première résistance (91) et une deuxième résistance (92) disposées en série entre ledit second conducteur (59) et ledit premier conducteur (58), une première borne de la première résistance (91) étant reliée audit second conducteur (59), la seconde borne de la première résistance (91) étant reliée à une première borne de la deuxième résistance (92), la seconde borne de la deuxième résistance (92) étant reliée audit premier conducteur (58), l'entrée positive dudit amplificateur opérationnel (107) étant reliée à la seconde borne de la première résistance (91) et donc à la première borne de la deuxième résistance (92).

6. Appareil selon l'une quelconque des revendications 1 à 5, **caractérisé en ce que** ledit étage redresseur-accumulateur (54) comporte une première diode (68), un premier condensateur (69), un deuxième condensateur (70) et une deuxième diode (71), l'anode de ladite première diode (68) étant reliée à l'un desdits points de raccordement d'entrée dudit étage redresseur-accumulateur (54), la cathode de ladite première diode (68) étant reliée à l'un desdits points de raccordement de sortie dudit étage redresseur-accumulateur (54) et à une première borne dudit premier condensateur (69), la second borne dudit premier condensateur (69) étant reliée à l'autre desdits points de raccordement d'entrée dudit étage redresseur-accumulateur (54) et à une première borne dudit deuxième condensateur (70), la seconde borne dudit deuxième condensateur (70) étant reliée à l'anode de ladite deuxième diode (71) et à l'autre desdits points de raccordement de sortie dudit étage redresseur-accumulateur (54), la cathode de ladite deuxième diode (71) étant reliée à l'anode de ladite première diode (68), ledit étage redresseur-accumulateur (54) comportant ainsi un redresseur-doubleur de tension de LATOUR.

7. Appareil selon la revendication 6, **caractérisé en ce que** ledit étage redresseur-accumulateur (54) comporte en outre un premier condensateur d'accumulation (72), un deuxième condensateur d'accumulation (73), une première résistance (74) et une deuxième résistance (75), ledit premier condensateur d'accumulation (72) et ladite première résistance (74) étant disposés en parallèle dudit premier condensateur (69), ledit deuxième condensateur d'accumulation (73) et ladite deuxième résistance (75) étant disposés en parallèle dudit deuxième condensateur (70).

8. Appareil selon l'une quelconque des revendications 1 à 7, **caractérisé en ce que** ledit étage de commutation (57) comporte un amplificateur opérationnel (114) et un organe de commutation (117, 118) ; l'entrée positive dudit amplificateur opérationnel (114) étant reliée à un conducteur de signal d'intégration (62) sur lequel ledit étage d'intégration temps-tension (56) fournit ledit signal d'intégration temps-tension, ledit niveau du signal d'intégration temps-tension étant la différence de potentiel entre ledit conducteur de signal d'intégration (62) et ledit second conducteur (58) ; l'entrée négative dudit amplificateur opérationnel (114) étant reliée à des composants (104, 105) grâce auxquels la différence de potentiel entre l'entrée négative de l'amplificateur opérationnel (114) et ledit premier conducteur (58) est maintenue à une valeur de référence constante préfixée, ledit signal d'intégration ayant un niveau représentatif de la non-survenance d'une dite surintensité prédéterminée lorsque la différence de potentiel entre ledit conducteur de signal d'intégration (62) et ledit premier conducteur (58) est plus petite que ladite valeur de référence constante préfixée, ledit signal d'intégration ayant un niveau représentatif de la survenance d'une dite surintensité prédéterminée lorsque la différence de potentiel entre ledit conducteur de signal d'intégration (62) et ledit premier conducteur (58) est plus grande que ladite valeur de référence constante préfixée ; la borne d'alimentation positive dudit amplificateur opérationnel (114) étant reliée audit second conducteur (59) ; la borne d'alimentation négative dudit amplificateur opérationnel (114) étant reliée audit premier conducteur (58) ; la sortie dudit amplificateur opérationnel (114) étant reliée audit organe de commutation (117,118) ; grâce à quoi si la différence de potentiel entre ledit conducteur de signal d'intégration (62) et ledit premier conducteur (58) est plus petite que ladite valeur de référence constante préfixée, la sortie de l'amplificateur opérationnel (114) est au potentiel dudit premier conducteur (58) et l'organe de commutation (117, 118) est bloqué, de sorte que l'organe de déclenchement relais (42) n'est pas alimenté par l'étage redresseur-accumulateur (54) ; et grâce à quoi si la différence de potentiel entre ledit conducteur de signal d'intégration (62) et le premier conducteur (58) est plus grande que ladite valeur de référence constante préfixée, la sortie dudit amplificateur opérationnel (114) est au potentiel dudit premier conducteur (59) et l'organe de commutation (117, 118) est passant, de sorte que l'organe de déclenchement relais (42) est alimenté par l'étage redresseur-accumulateur (54).

9. Appareil selon l'une quelconque des revendications 1 à 8, **caractérisé en ce qu'**il comporte un organe compact (124) comportant un organe de déclenchement magnétique (126) et un relais de déclenchement (125), l'organe de déclenchement magnétique (126) étant formé par une bobine de déclenchement magnétique disposée autour d'un noyau mobile commandant un percuteur agissant en cas de court-circuit sur ledit mécanisme de commande (50), le relais de déclenchement (125) étant formé par une bobine de relais de déclenchement disposée autour dudit noyau mobile, la bobine de déclenchement magnétique et la bobine de relais de déclenchement étant disposées l'une autour de l'autre, grâce à quoi ledit organe compact (124) est configuré pour former ledit deuxième transformateur avec ledit enroulement primaire qui est ladite bobine de déclenchement magnétique et ledit enroulement secondaire qui est ladite bobine de relais de déclenchement.

10. Appareil selon l'une quelconque des revendications 1 à 9, **caractérisé en ce qu'**il forme un disjoncteur différentiel modulaire ayant une largeur d'1 module.

## Patentansprüche

1. Stromschutzgerät einer elektrischen Anlage mit Wechselstrom mit einer ersten Zugangsklemme (22) für einen ersten elektrischen Pol, einer zweiten Zugangsklemme (23) für einen zweiten elektrischen Pol, der sich vom ersten elektrischen Pol unterscheidet, einer ersten Abgangsklemme (26) für den ersten elektrischen Pol und einer zweiten Abgangsklemme (27) für den zweiten elektrischen Pol; wobei das Gerät (10) aufweist:
- einen ersten Strombeförderungskreis zwischen der ersten Zugangsklemme (22) und der ersten Abgangsklemme (26), aufweisend einen festen Kontakt (28) und einen beweglichen Kontakt (29);
- einen zweiten Strombeförderungskreis zwischen der zweiten Zugangsklemme (23) und der zweiten Abgangsklemme (27) ;
- einen Steuermechanismus (50) des beweglichen Kontakts (29) mit zwei stabilen Positionen, jeweils einer trennenden Position, in welcher der bewegliche Kontakt (29) vom festen Kontakt (28) beabstandet ist, und einer verbindenden Position, in welcher sich der bewegliche Kontakt (29) auf dem festen Kontakt (28) abstützt;
- einen ersten elektrischen Transformator (35), aufweisend eine erste Primärwicklung (34), die Teil des ersten Beförderungskreises ist, eine zweite Primärwicklung (32), die Teil des zweiten Beförderungskreises ist und eine Sekundärwicklung (33), dank der ein vorher festgelegter Differentialfehler zwischen dem ersten Beförderungskreis und dem zweiten Beförderungskreis ermittelbar ist;
- ein Relaisauslöseorgan (42), das dazu ausgelegt ist, auf den Steuermechanismus (50) einzuwirken, damit er aus der verbindenden Position in die trennende Position wechselt, wenn er in einer vorher festgelegten Weise versorgt wird, wobei das Relaisauslöseorgan (42) und der erste elektrische Transformator (35) miteinander verbunden und dazu ausgelegt sind, damit, wenn der vorher festgelegte Differentialfehler auftritt, das Relaisauslöseorgan (42) in der vorher festgelegten Weise mit Energie versorgt wird, die ausschließlich von der Sekundärwicklung (33) des ersten elektrischen Transformators (35) kommt;
- einen zweiten elektrischen Transformator (37; 124), der eine Primärwicklung (36; 126) aufweist, die Teil des ersten Beförderungskreises oder des zweiten Beförderungskreises ist und eine Sekundärwicklung (44; 125), dank der die Stärke des in der Primärwicklung (36; 126) fließenden Stroms ermittelbar ist;
- einen elektronischen Schaltkreis (49), der zwischen der Sekundärwicklung (44) des zweiten elektrischen Transformators (37) und dem Relaisauslöseorgan (42) angeordnet ist, der dazu ausgelegt ist, damit das Relaisauslöseorgan (42) in der vorher festgelegten Weise mit Energie versorgt wird, die ausschließlich von der Sekundärwicklung (44) des zweiten Transformators (37) kommt, wenn ein in Bezug auf den Wert und die Dauer vorher festgelegter längerer Überstrom in der Primärwicklung (36) des zweiten Transformators (37) auftritt, aufweisend:
- eine Akkumulator-Gleichrichter-Stufe (54), die zwei Zugangsanschlusspunkte hat, die jeweils mit einem ersten Ende der Sekundärwicklung (44) des zweiten Transformators (37) und mit einem zweiten Ende der Sekundärwicklung (44) des zweiten Transformators (37) verbunden sind, und zwei Abgangsanschlusspunkte hat, die jeweils mit einem ersten Leiter (58) und einem zweiten Leiter (59) verbunden sind, zwischen denen eine Gleichspannung existiert, die für die Stärke des Stroms repräsentativ ist, der in der Primärwicklung (36) des zweiten Transformators (37) fließt;
- eine Komparatorstufe (55), die dazu ausgelegt ist, ein Signal der Überschreitung oder der Nicht-Überschreitung eines vorher festgelegten Grenzwerts der repräsentativen Gleichspannung bereitzustellen;
- eine Zeit-Spannung-Integrationsstufe (56), die dazu ausgelegt ist, ein Zeit-Spannung-Integrationssignal bereitzustellen, das ein Niveau hat, das für das Auftreten oder das Nicht-Auftreten eines in Bezug auf den Wert und die Dauer vorher festgelegten Überstroms in der Primärwicklung (36) des zweiten Transformators (37) repräsentativ ist, wobei das Niveau des Integrationssignals steigt, wenn die Komparatorstufe (55) beginnt, das Signal der Überschreitung bereitzustellen, während sie das Signal der Nicht-Überschreitung bereitstellte, mit dem Steigerungsgrad des Niveaus des Integrationssignals in Abhängigkeit von der repräsentativen Gleichspannung, wobei das Niveau des Integrationssignals sinkt, wenn die Komparatorstufe (55) beginnt, das Signal der Nicht-Überschreitung bereitzustellen, während sie das Signal der Überschreitung bereitstellte; und
- eine Umschalt-Stufe (57), die dazu ausgelegt ist, das Relaisauslöseorgan (42) von mindestens einem von dem ersten Leiter (58) und dem zweiten Leiter (59) zu isolieren, damit das Relaisauslöseorgan (42) nicht in der vorher festgelegten Weise versorgt wird, wenn das Integrationssignal ein Niveau hat, das für das Nicht-Auftreten eines vorher festgelegten Überstroms repräsentativ ist und das Relaisauslöseorgan (42) mit dem ersten Leiter (58) und dem zweiten Leiter (59) zu verbinden, damit das Relaisauslöseorgan (42) in der vorher festgelegten Weise versorgt wird, wenn das Integrationssignal ein Niveau hat, das für das Auftreten eines vorher festgelegten Überstroms repräsentativ ist;
**dadurch gekennzeichnet, dass** die Zeit-Spannung-Integrationsstufe (56) ausschließlich von zwei Leitern (58, 60) mit Spannung versorgt wird, zwischen denen von der Komparatorstufe (55) ein Spannungsniveau bereitgestellt wird, das das Signal der Überschreitung oder der Nicht-Überschreitung bildet, wobei das Signal der Nicht-Überschreitung ein vorher festgelegtes konstantes niedriges Spannungsniveau ist, wobei das Signal der Überschreitung ein hohes Spannungsniveau ist, das wie die repräsentative Gleichspannung schwankt.

2. Gerät nach Anspruch 1, **dadurch gekennzeichnet, dass** die Zeit-Spannung-Integrationsstufe (56) einen ersten Widerstand (111), einen Kondensator (112) und einen zweiten Widerstand (113) aufweist, wobei eine erste Klemme des ersten Widerstands (111) mit einem ersten (60) der zwei Leiter (58, 60) verbunden ist, zwischen denen das Spannungsniveau bereitgestellt wird, das das Signal der Überschreitung oder der Nicht-Überschreitung bildet, wobei die zweiten Klemme des ersten Widerstands (111) mit einer ersten Klemme des Kondensators (112) verbunden ist, wobei die zweiten Klemme des Kondensators (112) mit dem zweiten (58) der zwei Leiter (58, 60) verbunden ist, zwischen denen das Spannungsniveau bereitgestellt wird, das das Signal der Überschreitung oder der Nicht-Überschreitung bildet, wobei der zweiten Widerstand (113) parallel zum Kondensator (112) angeordnet ist, wobei die erste Klemme des Kondensators (112) mit einem Leiter eines Integrationssignals (62) verbunden ist, über den die Zeit-Spannung-Integrationsstufe (56) das Zeit-Spannung-Integrationssignal bereitstellt, wobei das Niveau des Zeit-Spannung-Integrationssignals die Potentialdifferenz zwischen dem Leiter eines Integrationssignals (62) und dem zweiten Leiter (58) der zwei Leiter (58, 60) ist, zwischen denen das Spannungsniveau bereitgestellt wird, das das Signal der Überschreitung oder der Nicht-Überschreitung bildet.

3. Gerät nach einem der Ansprüche 1 oder 2, **dadurch gekennzeichnet, dass** die Komparatorstufe (55) einen operativen Verstärker (107) aufweist, der als Komparator mit positivem Grenzwert angebracht ist, wobei die negative Versorgungsklemme des operativen Verstärkers (107) mit dem ersten Leiter (58) verbunden ist, wobei die positive Versorgungsklemme des operativen Verstärkers (107) mit dem zweiten Leiter (59) verbunden ist, wobei der Ausgang des operativen Verstärkers (107) mit einem Leiter (60) des Signal der Überschreitung oder der Nicht-Überschreitung verbunden ist, wobei die zwei Leiter, zwischen denen von der Komparatorstufe (55) ein Spannungsniveau bereitgestellt wird, das das Signal der Überschreitung oder der Nicht-Überschreitung bildet, der Leiter (60) des Signals der Überschreitung oder der Nicht-Überschreitung und der erste Leiter (58) sind, wobei das vorher festgelegte konstante niedrige Spannungsniveau, das das Signal der Nicht-Überschreitung bildet, das Niveau null ist, wobei das hohe Spannungsniveau, das wie die repräsentative Gleichspannung schwankt, das das Signal der Überschreitung bildet, die repräsentative Gleichspannung ist.

4. Gerät nach Anspruch 3, **dadurch gekennzeichnet, dass** die Komparatorstufe (55) ferner einen Widerstand (104) und eine Zener-Diode (105) aufweist, wobei der Widerstand (104) durch eine erste Klemme mit dem zweiten Leiter (59) und durch eine zweiten Klemme mit der Kathode der Zener-Diode (105) verbunden ist, deren Anode mit dem ersten Leiter (58) verbunden ist, wobei der negative Eingang des operativen Verstärkers (107) mit der Kathode der Zener-Diode (105) verbunden ist, wodurch die Potentialdifferenz zwischen dem negativen Eingang des operativen Verstärkers (107) und dem ersten Leiter (58) von der Zener-Diode (105) auf einem vorgegebenen konstanten Referenzwert gehalten wird.

5. Gerät nach einem der Ansprüche 3 oder 4, **dadurch gekennzeichnet, dass** die Komparatorstufe (55) eine Formungs-Unterstufe (55A) aufweist, die einen ersten Widerstand (91) und einen zweiten Widerstand (92) aufweist, die in Reihe zwischen dem zweiten Leiter (59) und dem ersten Leiter (58) angeordnet sind, wobei eine erste Klemme des ersten Widerstands (91) mit dem zweiten Leiter (59) verbunden ist, wobei die zweiten Klemme des ersten Widerstands (91) mit einer ersten Klemme des zweiten Widerstands (92) verbunden ist, wobei die zweiten Klemme des zweiten Widerstands (92) mit dem ersten Leiter (58) verbunden ist, wobei der positive Eingang des operativen Verstärkers (107) mit der zweiten Klemme des ersten Widerstands (91) und damit der ersten Klemme des zweiten Widerstands (92) verbunden ist.

6. Gerät nach einem der Ansprüche 1 bis 5, **dadurch gekennzeichnet, dass** die Akkumulator-Gleichrichter-Stufe (54) eine erste Diode (68), einen ersten Kondensator (69), einen zweiten Kondensator (70) und eine zweite Diode (71) aufweist, wobei die Anode der ersten Diode (68) mit einem der Zugangsanschlusspunkte der Akkumulator-Gleichrichter-Stufe (54) verbunden ist, wobei die Kathode der ersten Diode (68) mit einem der Abgangsanschlusspunkte der Akkumulator-Gleichrichter-Stufe (54) und mit einer ersten Klemme des ersten Kondensators (69) verbunden ist, wobei die zweite Klemme des ersten Kondensators (69) mit dem anderen der Zugangsanschlusspunkte der Akkumulator-Gleichrichter-Stufe (54) und mit einer ersten Klemme des zweiten Kondensators (70) verbunden ist, wobei die zweite Klemme des zweiten Kondensators (70) mit der Anode der zweiten Diode (71) und mit dem anderen der Abgangsanschlusspunkte der Akkumulator-Gleichrichter-Stufe (54) verbunden ist, wobei die Kathode der zweiten Diode (71) mit der Anode der ersten Diode (68) verbunden ist, wobei die Akkumulator-Gleichrichter-Stufe (54) somit einen LATOUR-Spannungsverdoppler-Gleichrichter aufweist.

7. Gerät nach Anspruch 6, **dadurch gekennzeichnet, dass** die Akkumulator-Gleichrichter-Stufe (54) ferner einen ersten Speicherkondensator (72), einen zweiten Speicherkondensator (73), einen ersten Widerstand (74) und einen zweiten Widerstand (75) aufweist, wobei der erste Speicherkondensator (72) und der erste Widerstand (74) parallel zum ersten Kondensator (69) angeordnet sind, wobei der zweite Speicherkondensator (73) und der zweite Widerstand (75) parallel zum zweiten Kondensator (70) angeordnet sind.

8. Gerät nach einem der Ansprüche 1 bis 7, **dadurch gekennzeichnet, dass** die Umschalt-Stufe (57) einen operativen Verstärker (114) und ein Umschaltorgan (117, 118) aufweist; wobei der positive Eingang des operativen Verstärkers (114) mit einem Leiter eines Integrationssignals (62) verbunden ist, über den die Zeit-Spannung-Integrationsstufe (56) das Zeit-Spannung-Integrationssignal bereitstellt, wobei das Niveau des Zeit-Spannung-Integrationssignals die Potentialdifferenz zwischen dem Leiter eines Integrationssignals (62) und dem zweiten Leiter (58) ist; wobei der negative Eingang des operativen Verstärkers (114) mit Komponenten (104, 105) verbunden ist, dank derer die Potentialdifferenz zwischen dem negative Eingang des operativen Verstärkers (114) und dem ersten Leiter (58) auf einem vorgegebenen konstanten Referenzwert gehalten wird, wobei das Integrationssignal ein repräsentatives Niveau für das Nicht-Auftreten eines vorher festgelegten Überstroms hat, wenn die Potentialdifferenz zwischen dem Leiter eines Integrationssignals (62) und dem ersten Leiter (58) kleiner als der vorgegebene konstante Referenzwert ist, wobei das Integrationssignal ein repräsentatives Niveau für das Auftreten eines vorher festgelegten Überstroms hat, wenn die Potentialdifferenz zwischen dem Leiter eines Integrationssignals (62) und dem ersten Leiter (58) größer als der vorgegebene konstante Referenzwert ist; wobei die positive Versorgungsklemme des operativen Verstärkers (114) mit dem zweiten Leiter (59) verbunden ist; wobei die negative Versorgungsklemme des operativen Verstärkers (114) mit dem ersten Leiter (58) verbunden ist; wobei der Ausgang des operativen Verstärkers (114) mit dem Umschaltorgan (117, 118) verbunden ist; dank dessen, wenn die Potentialdifferenz zwischen dem Leiter eines Integrationssignals (62) und dem ersten Leiter (58) kleiner als der vorgegebene konstante Referenzwert ist, der Ausgang des operativen Verstärkers (114) auf dem Potential des ersten Leiters (58) ist und das Umschaltorgan (117, 118) blockiert ist, so dass das Relaisauslöseorgan (42) nicht von der Akkumulator-Gleichrichter-Stufe (54) versorgt wird; und dank dessen, wenn die Potentialdifferenz zwischen dem Leiter eines Integrationssignals (62) und dem ersten Leiter (58) größer als der vorgegebene konstante Referenzwert ist, der Ausgang des operativen Verstärkers (114) auf dem Potential des ersten Leiters (59) ist und das Umschaltorgan (117, 118) durchlässig ist, so dass das Relaisauslöseorgan (42) von der Akkumulator-Gleichrichter-Stufe (54) versorgt wird.

9. Gerät nach einem der Ansprüche 1 bis 8, **dadurch gekennzeichnet, dass** es ein Kompaktorgan (124) aufweist, das ein magnetisches Auslöseorgan (126) und ein Auslöserelais (125) aufweist, wobei das magnetische Auslöseorgan (126) von einer magnetischen Auslösespule gebildet ist, die um einen beweglichen Kern angeordnet ist, der einen Schlagbolzen steuert, der im Fall eines Kurzschlusses auf den Steuermechanismus (50) einwirkt, wobei das Auslöserelais (125) von einer Auslöserelaisspule gebildet ist, die um den beweglichen Kern angeordnet ist, wobei die magnetische Auslösespule und die Auslöserelaisspule umeinander angeordnet sind, dank dessen das Kompaktorgan (124) dazu ausgelegt ist, den zweiten Transformator mit der Primärwicklung zu bilden, die die magnetische Auslösespule ist und der Sekundärwicklung, die die Auslöserelaisspule ist.

10. Gerät nach einem der Ansprüche 1 bis 9, **dadurch gekennzeichnet, dass** es einen modularen Fehlerstromschutzschalter mit einer Breite von 1 Modul bildet.

## Claims

1. Protective electrical apparatus for an alternating current electrical installation, having a first in terminal (22) for a first electrical pole, a second in terminal (23) for a second electrical pole different from the first electrical pole, a first out terminal (26) for the first electrical pole and a second out terminal (27) for the second electrical pole; which apparatus (10) comprises:
- a first circuit for conveying current between the first in terminal (22) and the first out terminal (26), comprising a fixed contact (28) and a movable contact (29);
- a second circuit for conveying current between the second in terminal (23) and the second out terminal (27);
- an actuation mechanism (50) of said movable contact (29) having two stable positions, respectively a cutting-off position in which said movable contact (29) is away from the fixed contact (28) and an engaging position in which said movable contact (29) bears on said fixed contact (28);
- a first electrical transformer (35), comprising a first primary winding (34) forming part of said first conveying circuit, a second primary winding (32) forming part of said second conveying circuit and a secondary winding (33) by virtue of which may be detected a predetermined differential fault between said first conveying circuit and second conveying circuit;
- a relay triggering member (42) configured to act on said actuation mechanism (50) to pass it from said engaging position to said cutting-off position when it is supplied in a predetermined manner, said relay triggering member (42) and said electrical transformer (35) being connected to each other and configured such that, when said predetermined differential fault occurs, said relay triggering member (42) is supplied in said predetermined manner by energy coming exclusively from said secondary winding (33) of said first electrical transformer (35);
- a second electrical transformer (37; 124), comprising a primary winding (36; 126) forming part of said first conveying circuit or said second conveying circuit and a secondary winding (44 ; 125) by virtue of which the magnitude of the current passing in said primary winding (36 ; 126) can be detected;
- an electronic circuit (49) disposed between said secondary winding (44) of said second electrical transformer (37) and said relay triggering member (42), configured such that said relay triggering member (42) is supplied in said predetermined manner by energy coming exclusively from said secondary winding (44) of said second transformer (37) when a prolonged overcurrent of predetermined value and duration occurs in said primary winding (36) of said second transformer (37), comprising:
- a rectifier-accumulator stage (54) having two input connection points respectively connected to a first end of said secondary winding (44) of said second transformer (37) and to a second end of said secondary winding (44) of said second transformer (37) and having two output connection points respectively connected to a first conductor (58) and to a second conductor (59) between which there is a representation DC voltage representing said magnitude of the current passing in said primary winding (36) of said second transformer (37);
- a comparator stage (55) configured to provide a signal of exceedance or of non-exceedance of a predetermined threshold of said representation DC voltage;
- a time-voltage integration stage (56) configured to provide a time-voltage integration signal having a level representing the occurrence or non-occurrence of an overcurrent of predetermined value and duration in the primary winding (36) of said second transformer (37), the level of said integration signal increasing when said comparator stage (55) comes to supply said exceedance signal whereas it had been supplying said non-exceedance signal, the degree of increase of the level of the integration signal depending on said representation DC voltage, the level of said integration signal decreasing when said comparator stage (55) comes to supply said signal of non-exceedance whereas it had been supplying said exceedance signal; and
- a switching stage (57), configured to isolate said relay triggering member (42) from at least one of said first conductor (58) and second conductor (59) in order for said relay triggering member (42) not to be supplied in said predetermined manner when said integration signal has a level representing the non-occurrence of a said predetermined overcurrent and to connect said relay triggering member (42) with said first conductor (58) and second conductor (59) in order for said relay triggering member (42) to be supplied in said predetermined manner when said integration signal has a level representing the occurrence of a said predetermined overcurrent;
**characterized in that** said time-voltage integration stage (56) is supplied with voltage exclusively by two conductors (58, 60) between which is supplied, by said comparator stage (55), a voltage level forming said signal of exceedance or of non-exceedance, said non-exceedance signal being a predetermined constant low voltage level, said exceedance signal being a high voltage level varying like said representation DC voltage.

2. Apparatus according to claim 1, **characterized in that** said time-voltage integration stage (56) comprises a first resistor (111), a capacitor (112) and a second resistor (113), a first terminal of the first resistor (111) being connected to a first (60) of said two conductors (58, 60) between which is supplied said voltage level forming said signal of exceedance or of non-exceedance, the second terminal of the first resistor (111) being connected to a first terminal of the capacitor (112), the second terminal of the capacitor (112) being connected to the second (58) of said two conductors (58, 60) between which is supplied said voltage level forming said signal of exceedance or of non-exceedance, the second resistor (113) being disposed in parallel with the capacitor (112), said first terminal of the capacitor (112) being connected to an integration signal conductor (62) to which said time-voltage integration stage (56) supplies said time-voltage integration signal, said level of the time-voltage integration signal being the potential difference between said integration signal conductor (62) and said second conductor (58) of said two conductors (58, 60) between which is supplied said level of voltage forming said signal of exceedance or of non-exceedance;

3. Apparatus according to any one of claims 1 or 2, **characterized in that** - said comparator stage (55) comprises an operational amplifier (107) mounted as a comparator with a positive threshold, the negative supply terminal of said operational amplifier (107) being connected to said first conductor (58), the positive supply terminal of said operational amplifier (107) being connected to said second conductor (59), the output from said operational amplifier (107) being connected to an exceedance or non-exceedance signal conductor (60), said two conductors between which is supplied by said comparator stage (55) a level of voltage forming said exceedance or non-exceedance signal being said exceedance or non-exceedance signal conductor (60) and said first conductor (58), said predetermined constant low voltage level forming said non-exceedance signal being the level zero, said high voltage level varying like said representation DC voltage forming said exceedance signal being said representation DC voltage.

4. Apparatus according to claim 3, **characterized in that** - said comparator stage (55) further comprises a resistor (104) and a Zener diode (105), said resistor (104) being connected by a first terminal to said second conductor (59) and by a second terminal to the cathode of said Zener diode (105) of which the anode is connected to said first conductor (58), the negative input of the operational amplifier (107) being connected to the cathode of said Zener diode (105), whereby the potential difference between the negative input of the operational amplifier (107) and said first conductor (58) is maintained by said Zener diode (105) at a pre-set constant reference value.

5. Apparatus according to any one of claims 3 or 4, **characterized in that** - said comparator stage (55) comprises a formatting sub-stage (55A) comprising a first resistor (91) and a second resistor (92) disposed in series between said second conductor(59) and said first conductor (58), a first terminal of the first resistor (91) being connected to said second conductor (59), the second terminal of the first resistor (91) being connected to a first terminal of the second resistor (92), the second terminal of the second resistor (92) being connected to said first conductor (58), the positive input of said operational amplifier (107) being connected to the second terminal of the first resistor (91) and thus to the first terminal of the second resistor (92).

6. Apparatus according to any one of claims 1 to 5, **characterized in that** said rectifier-accumulator stage (54) comprises a first diode (68), a first capacitor (69), a second capacitor (70) and a second diode (71), the anode of said first diode (68) being connected to one of said input connection points of said rectifier-accumulator stage (54), the cathode of said first diode (68) being connected one of said output connection points of said rectifier-accumulator stage (54) and to a first terminal of said first capacitor (69), the second terminal of said first capacitor (69) being connected to the other of said input connection points of said rectifier-accumulator stage (54) and to a first terminal of said second capacitor (70), that second terminal of said second capacitor (70) being connected to the anode of said second diode (71) and to the other of said output connection points of said rectifier-accumulator stage (54), the cathode of said second diode (71) being connected to the anode of said first diode (68), said rectifier-accumulator stage (54) thus comprising a Latour voltage doubling rectifier.

7. Apparatus according to claim 6, **characterized in that** - said rectifier-accumulator stage (54) further comprises a first accumulation capacitor (72), a second accumulation capacitor (73), a first resistor (74) and a second resistor (75), said first accumulation capacitor (72) and said first resistor (74) being disposed in parallel with said first capacitor (69), said second accumulation capacitor (73) and said second resistor (75) being disposed in parallel with said second capacitor (70).

8. Apparatus according to any one of claims 1 to 7, **characterized in that** said switching stage (57) comprises an operational amplifier (114) and a switch member (117, 118); the positive input of said operational amplifier (114) being connected to an integration signal conductor (62) to which said time-voltage integration stage (56) supplies said time-voltage integration signal, said level of the time-voltage integration signal being the potential difference between said integration signal conductor (62) and said second conductor (58); the negative input of said operational amplifier (114) being connected to components (104, 105) by virtue of which the potential difference between the negative input of the operational amplifier (114) and said first conductor (58) is maintained at a pre-set constant reference value, said integration signal having a level representing the non-occurrence of a said predetermined overcurrent when the potential difference between said integration signal conductor (62) and said first conductor (58) is smaller than said pre-set constant reference value, said integration signal having a level representing the occurrence of a said predetermined overcurrent when the potential difference between said integration signal conductor (62) and said first conductor (58) is greater than said pre-set constant reference value; the positive supply terminal of said operational amplifier (114) being connected to said second conductor (59); the negative supply terminal of said operational amplifier (114) being connected to said first conductor (58); the output of said operational amplifier (114) being connected to said switch member (117,118); whereby if the potential difference between said integration signal conductor (62) and said first conductor (58) is smaller than said pre-set constant reference value, the output of the operational amplifier (114) is at the potential of said first conductor (58) and the switch member (117, 118) is blocked, such that the relay triggering member (42) is not supplied by the rectifier-accumulator stage (54); and whereby if the potential difference between said integration signal conductor (62) and the first conductor (58) is greater than said pre-set constant reference value, the output of the operational amplifier (114) is at the potential of said first conductor (59) and the switch member (117, 118) conducts, such that the relay triggering member (42) is supplied by the rectifier-accumulator stage (54).

9. Apparatus according to any one of claims 1 to 8, **characterized in that** it comprises a compact member (124) comprising a magnetic triggering member (126) and a triggering relay (125), the magnetic triggering member (126) being formed by a magnetic triggering coil disposed around a movable core actuating a striker acting in case of short-circuit on said actuation mechanism (50), the triggering relay (125) being formed by a triggering relay coil disposed around said movable core, the magnetic triggering coil and the triggering relay coil being disposed one around the other, whereby said compact member (124) is configured to form said second transformer with said primary winding being said magnetic triggering coil and said secondary winding being said triggering relay coil.

10. Apparatus according to any one of claims 1 to 9, **characterized in that** it forms a modular differential circuit breaker having a width of 1 module
